# EUROPEAN PATENT SPECIFICATION

(11) **EP 3 394 360 B1**
(45) Date of publication and mention of the grant of the patent: **03.12.2025**
(21) Application number: 16793743.2
(22) Date of filing: 12.10.2016
(51) Int. Cl.: E04B 1/86, E04C 2/04, E04F 13/08

(54) **ACOUSTIC DRYWALL PANEL**
AKUSTISCHE TROCKENBAUPLATTE
PANNEAU DE PAROI ACOUSTIQUE

(30) Priority: 21.12.2015 EP 15003628
(43) Date of publication of application: 31.10.2018
(73) Proprietor: Knauf Gips KG, 97346 Iphofen (DE)
(72) Inventor: SEIDEL, Jochen, 97346 Iphofen (DE); HERFURTH, Dominik, 97346 Iphofen (DE); VIEBAHN, Michael, 97346 Iphofen (DE)
(74) Representative: Gleim Petri Patent- und Rechtsanwaltspartnerschaft mbB
(86) International application number: PCT/EP2016/001687
(87) International publication number: WO 2017/108146

(56) References cited:
- EP-A1- 0 085 863
- FR-A- 1 121 259
- GB-A- 664 729
- JP-A- 2001 132 132
- JP-A- H10 292 610

## Description

The invention relates to an acoustic drywall panel and to a drywall construction comprising such an acoustic drywall panel.

The invention seeks for improvements in the technical field of acoustic drywall constructions. The drywall constructions are for example walls or ceilings arranged in the interior of buildings. In particular, the invention relates to an acoustic drywall panel for the application in a drywall construction capable of improving the room acoustics in the interior of buildings.

Common drywall constructions comprise a sub-construction to which the drywall panels are attached. For example in a drywall ceiling, the sub-construction is made of horizontally arranged drywall profiles (i.e. metal beam profiles) which are attached via hangers to the raw ceiling (e.g. the concrete ceiling). The drywall panels are attached to the drywall profiles by screws.

Room acoustics can be improved by sound absorption. Known drywall constructions comprise acoustic drywall panels having a plurality of perforations shaped therein, each of which extending from one surface to the opposite surface so as to allow for the passage of air there through. The perforations can be of a circular or quadratic shape with varying perforation patterns, like continuous pattern, block pattern or random pattern (stray pattern). In one particular example, the drywall panels are gypsum plasterboards with a portion of the perforations in relation to the overall surface area of between about 9 - 25 %.

At ceilings, specific techniques are used for arranging the perforations of adjacent drywall panels so as to provide a continuous visual appearance of the perforation pattern over the entire ceiling surface.

Since air can penetrate via the perforations, the sound propagating in the medium air can penetrate in the space behind the perforated drywall panel. A sound wave propagating in the room can enter the space behind the attached drywall panel to be attenuated in the space between the drywall panel and the raw ceiling to which the drywall panel is attached. This allows for sound absorption, in particular when a sound absorbing material is arranged between the drywall panel and the raw ceiling, i.e. porous material, polyester wool, mineral wool, melamine resin foam or porous plaster. It is also possible to arrange a cover fleece material as sound permeable lining to the lower surface to provide a visually closed appearance.

Another common drywall construction for a wall is a facing framework having a sub-construction with vertically arranged drywall profiles to which the drywall panels are attached. In constructions with closed surfaces, a single opening has a worsening impact to the sound insulation. However, in case of a two layer construction, such an opening allows for improving the sound insulation.

For drywall constructions, the sound insulating value [dB] is determined over the frequency range from 63 Hz to 4000 Hz which is acoustically relevant in the interior of buildings. The sound insulating characteristic is determined by the resonance frequency fᵣₑₛ and the frequency of coincidence f_{gr}.

An improvement in the sound insulation is achieved by increasing the mass per unit area what lowers the resonance frequency fᵣₑₛ in a manner so as to be out of the range which is relevant for room acoustics. A further improvement in the sound insulation results from increasing the flexibility of the gypsum plasterboard which allows for increasing the frequency of coincidence f_{gr}. By increasing the flexibility, the frequency of coincidence f_{gr} can be increased into an acoustically uncritical region.

One particular example for a sound insulating gypsum plasterboard is the product "Knauf Silentboard" which has an high mass per unit area of 17,5 kg/m² (thickness 12.5 mm) compared to 8.5 kg/m ² of a standard gypsum plasterboard product, e.g. the "Knauf GKB". Another hard gypsum board is disclosed by JP H10 292610 A.

Acoustic drywall panels with perforations are disclosed by EP 0 085 863 A1, FR 1121 259 A, GB 664 729 A or JP 2001 132132 A.

A problem related to the prior art is that advantages related to drywall constructions comprising perforated boards (sound absorption) cannot be combined with advantages related to drywall constructions comprising acoustic plasterboards having an increased mass (sound attenuation) because the perforations would reduce the mass per unit area which in turn would negatively affect the sound insulating properties.

It is difficult to form the perforations in the gypsum plasterboard which is carried out by punching out a plurality of holes at the same time. A problem related thereto is that the bridging sections between adjacent perforations break or that the edge portions of the perforations break. Hence, it is only known to provide perforations in a drywall panel with low mass per unit area, i.e. with a low density or a small thickness.

Thus, it is an object of the invention to provide an acoustic drywall panel and a drywall construction comprising such an acoustic drywall panel which overcomes the disadvantages known from the prior art. In particular it is an object of the invention to provide an acoustic drywall panel which allows for improving the acoustics by sound absorption as well as sound insulation of impact sound and airborne sound.

The invention provides an acoustic drywall panel for being applied in a drywall construction, the acoustic drywall panel having a mass per surface area of more than 1.2 kg/m ² per 1 mm thickness (12 kg/m² per 12 mm) as unperforated panel. The acoustic drywall panel comprises a plurality of perforations shaped therein, each perforation extending through the acoustic drywall panel to allow for the penetration of air wherein the acoustic drywall panel (1) is a gypsum plasterboard or a gypsum fiber board wherein the gypsum material comprises lime or BaSO₄.

The acoustic drywall panel overcomes the disadvantages known from the prior art by forming the perforations in a panel of a mass per unit area which is higher compared to known perforated panels arranged in sound absorbing drywall constructions. This allows for providing sound absorption as well as improvements related to sound insulation in regard to impact sound and airborne sound. Surprisingly, the produced boards did not break up at the bridging parts between the perforations nor at the edges of the perforations themselves. The term "as unperforated panel" is to be understood that the mass per unit area applies to the unperforated panel, i.e. to the mass per unit area of the drywall panel before the perforations are punched therein.

By adding lime or BaSO₄ during the production of the gypsum plasterboard, the flexibility is increased. This allows increasing the frequency of coincidence of the attached gypsum plasterboard in a manner so as to be out of the range which is relevant for room acoustics.

An advantageous aspect is that the mass per surface area is more than 12 kg/m ² per 12 mm thickness or 1.2 kg/m² per 1 mm thickness as unperforated panel, especially more than 17 kg/m ² per 12 mm thickness (1.7 kg/m ² per 1.2 mm or 1 .4 kg/m ² per mm) as unperforated panel. In particular 17.5 kg/m² per 12 mm are gypsum plasterboards known to affect sound insulation.

The acoustic drywall panel is advantageously a gypsum plasterboard but can also be a gypsum fiber board or a cement board. The gypsum plasterboard comprises a paper layer at the outer side, i.e. a paper facer, with a gypsum material core layer arranged in between.

Preferably, the perforations are square shaped, each square perforation having an edge length of 5 to 15 mm, and wherein adjacent perforations are arranged at a center to center distance of 20 to 30 mm. In one particular example, the square perforations have an edge length of 12 mm and are arranged at a center to center distance of 25 mm. These dimensions have shown to allow for a good production of the gypsum plasterboards.

According to another preferred alternative, the perforations are circular shaped, each circular perforation having a diameter of 15 to 25 mm, and wherein adjacent perforations are arranged at a center to center distance of 35 to 45 mm. In one particular example, the circular perforations have a diameter of 20 mm and are arranged at a center to center distanced 42 mm. These dimensions have shown to allow for a good production of the gypsum plasterboards.

Another advantageous embodiment relates to perforations which are filled with a porous material. The porous material can be filled into the perforations during the production of the drywall panels or during the construction at the construction site. This allows for providing acoustic panels with closed surfaces which are preferred under visual aspects.

Particularly preferred, the porous material comprises charcoal or perlite as material. Both materials have shown to be sufficiently porous to allow for the propagation of sound there through.

Another aspect of the invention relates to a drywall construction comprising an acoustic drywall panel as described herein. The drywall construction can be a wall construction or a ceiling construction. Typically those constructions comprise a sub-construction made of metal beam drywall profiles to which the drywall panels are attached in a manner so as to form a closed surface. Particularly preferred, the drywall profiles are acoustic drywall profiles comprising a corrugation at the web portion which connects the flange portion or flexible flange portions (i.e. with separation cuts).

Preferably, the acoustic drywall panels are arranged in a manner so as to form a double layer. The double layer construction allows for doubling the mass per unit area to improve the sound insulation capabilities.

Another advantageous aspect relates to the double layer of the acoustic drywall panels comprising perforations of different panels which are arranged in a manner so as to be at least partly connected to each other. In this way the sound absorption can be maintained since the air can penetrate through the connected perforations.

Preferably, the acoustic drywall panels forming the double layer are attached to each other by use of an elastic hot melt adhesive. The elastic hot melt adhesive allows to acoustically decoupling the attached drywall panels.

According to one advantageous aspect of the invention, the drywall construction comprises a sound absorbing material. The sound absorbing material can be a mineral wool applied between the drywall panels and the raw ceiling or the covered part of the construction.

According to another advantageous aspect, the drywall construction comprises a fleece material. The fleece material allows for the propagation of sound there through while preventing a flow of air.

In the following the invention will be explained in more detail with reference to the drawings. Like reference numerals denote similar features throughout the drawings is the drawings show:
- Fig. 1:: acoustic drywall panel according to the invention
- Fig. 2:: drywall construction comprising four acoustic drywall panels according to the invention
- Fig. 3:: acoustic drywall panel with square shaped perforations
- Fig. 4:: acoustic drywall panel with circular shaped perforations
- Fig. 5: diagram of airborne sound reduction
- Fig. 6: diagram of impact sound insulation over frequency range

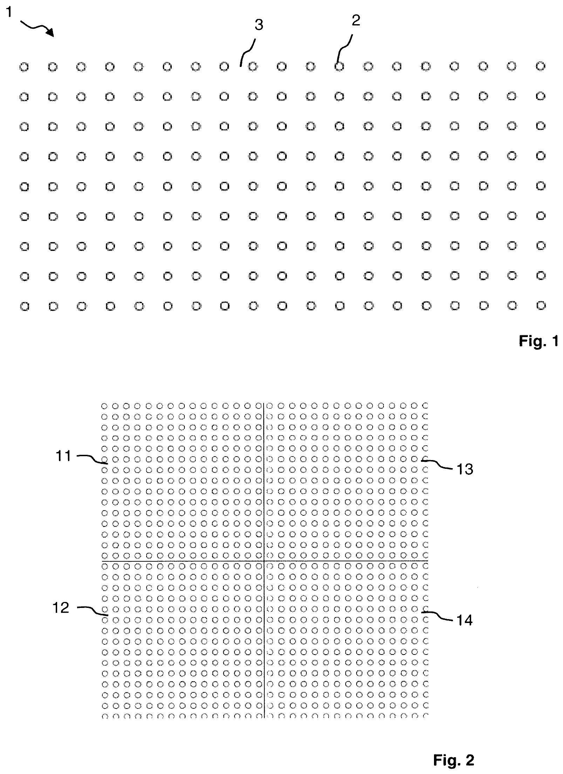

**Figure 1** illustrates an acoustic drywall panel 1 as it is to be applied in a drywall construction. The acoustic drywall panel 1 is a gypsum plasterboard having a mass per surface area of 17,5 kg/m² and a thickness of 12 mm as unperforated panel which means the mass per unit area is to be determined before the perforations are shaped (punched) therein. The acoustic drywall panel 1 comprises a plurality of perforations 2. Adjacent perforations 2 are connected via bridging parts 3. Surprisingly, the produced boards did not break up at the bridging parts 3 in between perforations 2 as well as at edge portions of the perforations 2 although the raw density of the board was higher than in usually used plasterboards. BaSO₄ has been added during the production of the gypsum plasterboard 1 which allows achieving a greater structural flexibility.

**Figure 2** shows a drywall construction comprising an acoustic drywall panel 1 as exemplified in **Fig. 1****.** The four acoustic drywall panels 11, 12, 13, 14 are arranged so as to border each other. In the shown arrangement, a continuous perforation 2 pattern is formed which extends over the entire surface of the drywall construction. That means that the distance between adjacent perforations 2 does not change at bridging panels 11, 12, 13, 14.

The respective acoustic drywall panels 1 are arranged in a manner so as to form a double layer which means that two panels 1 can be arranged in a sandwich like manner. The double layer of the acoustic drywall panels 11, 12, 13, 14 comprises connected perforations 2 of different panels which are, at least partly, arranged in a manner so as to be connected to each other. This allows for air to penetrate there through so that sound can propagate there through. In this example, the acoustic drywall panels 11, 12, 13, 14 forming the double layer being attached to each other by use of elastic hot melt adhesive.

Above the drywall construction 11, 12, 13, 14 a sound absorbing material, like mineral wool can be arranged. Additionally a fleece material can be attached to the acoustic panels to either visually cover the panels and/or to reduce the penetration of air.

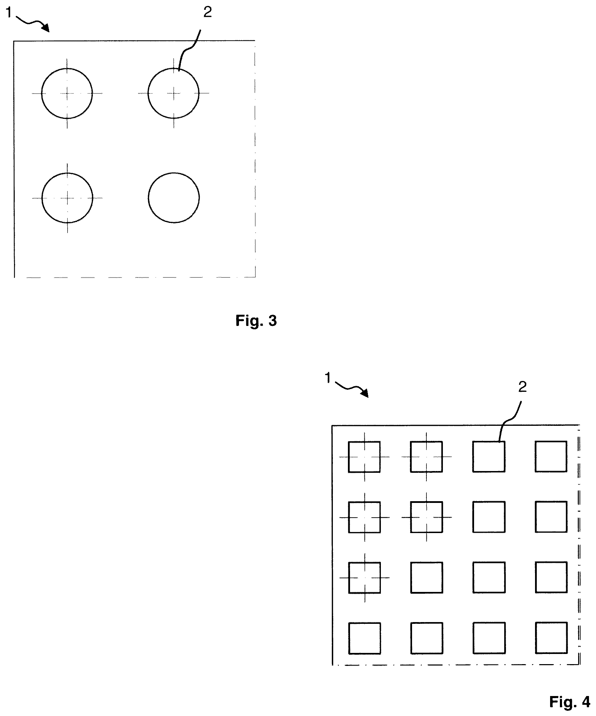

**Figure 3** is a section of an acoustic drywall panel 1 having perforations 2 of square shape. Each square perforation 2 (being quadratic and) having an edge length of 12 mm. The distance between adjacent perforations 2 from center to center is in this particular example 25 mm.

**Figure 4** is a section of an acoustic drywall panel 1 having perforations 2 of circular shape. Each circular perforation 2 has a diameter of 20 mm. The distance between adjacent perforations 2 from center to center is in this particular example 42 mm.

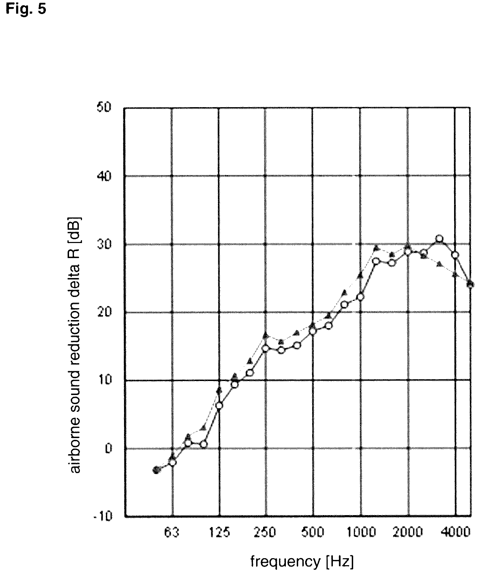

**Figure 5** shows the airborne sound reduction over the frequency range of 50 to 5000 Hz which is relevant for indoor applications. The airborne sound reduction is shown for a known perforated sound insulation panel (Knauf Cleaneo Acoustic, hollow circles) and an inventive acoustic drywall panel (perforated Knauf Silent Board, filled triangles). The inventive board has the same perforation density and shape as the known Acoustic board but a higher raw density (Knauf Cleaneo Acoustic: 0.76 kg/(m²*mm); Knauf Silent Board: 1.45 kg/(m²*mm)).

The sound reduction of the inventive plasterboard is at most relevant frequencies higher than the sound reduction of the Cleaneo Acoustic Board. The only area where the sound reduction is lower is in the very high frequency range. However, in this range there is already a very high ability to dampen the sound so that this drawback is not crucial.

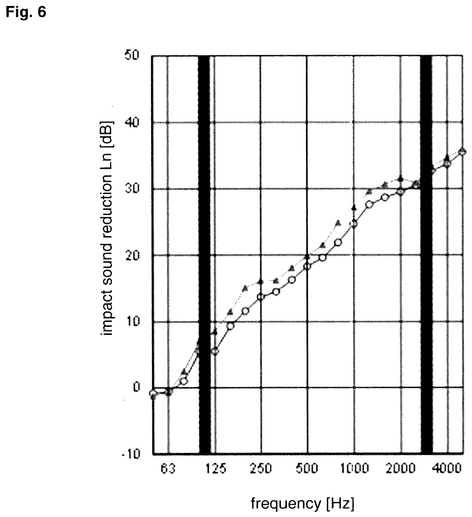

**Figure 6** shows a comparison of the same two board types as **Fig. 5****,** however with respect their ability to reduce impact sound. Triangles represent the values for the inventive board. The hollow circles represent the values for the Cleaneo Acoustic Board. In the range between 100 and 3000 Hz the sound reduction is always higher for the inventive board than for the board known from the state of the art. Thus, Rw and Lnw both are about 2 dB higher than in the state of the art acoustic board.

## Claims

1. Acoustic drywall panel (1) for being applied in a drywall construction (11, 12, 13, 14), the acoustic drywall panel (1) comprising a plurality of perforations (2) shaped therein, each perforation (2) extending through the acoustic drywall panel (1) to allow for the penetration of air, wherein the acoustic drywall panel (1) is a gypsum plasterboard or a gypsum fiber board, **characterized in that** the acoustic drywall panel (2) has a mass per surface area of more than 1.2 kg/m² per 1 mm thickness as unperforated panel and **in that** the gypsum material comprises lime or BaSO₄.

2. Acoustic drywall panel (1) according to claim 1, wherein the mass per surface area is more than 1.4 kg/m ² per 1 mm thickness as unperforated panel.

3. Acoustic drywall panel (1) according to any one of the preceding claims, wherein the perforations (2) are square shaped, each square perforation (2) having an edge length of 5 to 15 mm, and wherein adjacent perforations (2) are arranged at a center to center distance of 20 to 30 mm.

4. Acoustic drywall panel (1) according to any one of claims 1 to 2, wherein the perforations are circular shaped, each circular perforation (2) having a diameter of 15 to 25 mm, and wherein adjacent perforations (2) are arranged at a center to center distance of 35 to 45 mm.

5. Acoustic drywall panel (1) according to any one of the preceding claims, wherein the perforations (2) are filled with a porous material.

6. Acoustic drywall panel (1) according to claim 5, wherein the porous material comprises charcoal or perlite.

7. Drywall construction (11, 12, 13, 14) comprising an acoustic drywall panel (1) according to any one of the proceeding claims.

8. Drywall construction (11, 12, 13, 14) according to claim 7, wherein the acoustic drywall panels (1) are arranged in a manner so as to form a double layer.

9. Drywall construction (11, 12, 13, 14) according to claim 8, wherein the double layer of the acoustic drywall panels (1) comprises perforations (2) of different panels which are arranged in a manner so as to be at least partly connected to each other.

10. Drywall construction (11, 12, 13, 14) according to claim 9, wherein the acoustic drywall panels (1) forming the double layer being attached to each other by use of an elastic hot melt adhesive.

11. Drywall construction (1 1, 12, 13, 14) according to any one of the claims 7 to 10, further comprising a sound absorbing material.

12. Drywall construction (11, 12, 13, 14) according to any one of the claims 7 to 11, further comprising a fleece material.

## Patentansprüche

1. Akustik-Trockenbauplatte (1) für den Einsatz in einer Trockenbaukonstruktion (11, 12, 13, 14), wobei die Akustik-Trockenbauplatte (1) eine Vielzahl von darin ausgeformten Perforationen (2) aufweist, wobei sich jede Perforation (2) durch die Akustik-Trockenbauplatte (1) erstreckt, um das Eindringen von Luft zu ermöglichen, wobei die Akustik-Trockenbauplatte (1) eine Gipskartonplatte oder eine Gipsfaserplatte ist, **dadurch gekennzeichnet, dass** die Akustik-Trockenbauplatte (2) eine Masse pro Flächeneinheit von mehr als 1,2 kg/m² pro 1 mm Dicke als unperforierte Platte aufweist, und dass das Gipsmaterial Kalk oder BaSO₄ enthält.

2. Akustik-Trockenbauplatte (1) nach Anspruch 1, wobei die Masse pro Flächeneinheit mehr als 1,4 kg/m² pro 1 mm Dicke als unperforierte Platte beträgt.

3. Akustik-Trockenbauplatte (1) nach einem der vorangehenden Ansprüche, wobei die Perforationen (2) quadratisch geformt sind, wobei jede quadratische Perforation (2) eine Kantenlänge von 5 mm bis 15 mm aufweist, und wobei benachbarte Perforationen (2) in einem Mitte-zu-Mitte-Abstand von 20 mm bis 30 mm angeordnet sind.

4. Akustik-Trockenbauplatte (1) nach einem der Ansprüche 1 bis 2, wobei die Perforationen kreisförmig geformt sind, wobei jede kreisförmige Perforation (2) einen Durchmesser von 15 mm bis 25 mm aufweist, und benachbarte Perforationen (2) in einem Mitte-zu-Mitte-Abstand von 35 mm bis 45 mm angeordnet sind.

5. Akustik-Trockenbauplatte (1) nach einem der vorangehenden Ansprüche, wobei die Perforationen (2) mit einem porösen Material gefüllt sind.

6. Akustik-Trockenbauplatte (1) nach Anspruch 5, wobei das poröse Material Aktivkohle oder Perlit enthält.

7. Trockenbaukonstruktion (11, 12, 13, 14), umfassend eine Akustik-Trockenbauplatte (1) nach einem der vorangehenden Ansprüche.

8. Trockenbaukonstruktion (11, 12, 13, 14) nach Anspruch 7, wobei die Akustik-Trockenbauplatten (1) so angeordnet sind, dass sie eine Doppelschicht bilden.

9. Trockenbaukonstruktion (11, 12, 13, 14) nach Anspruch 8, wobei die Doppelschicht der Akustik-Trockenbauplatten (1) Perforationen (2) verschiedener Platten umfasst, die angeordnet sind, um zumindest teilweise miteinander verbunden zu sein.

10. Trockenbaukonstruktion (11, 12, 13, 14) nach Anspruch 9, wobei die die Doppelschicht bildenden Akustik-Trockenbauplatten (1) unter Verwendung eines elastischen Heißschmelzklebstoffs miteinander verbunden sind.

11. Trockenbaukonstruktion (11, 12, 13, 14) nach einem der Ansprüche 7 bis 10, ferner umfassend ein schallabsorbierendes Material.

12. Trockenbaukonstruktion (11, 12, 13, 14) nach einem der Ansprüche 7 bis 11, ferner umfassend ein Vliesmaterial.

## Revendications

1. Panneau acoustique de cloison sèche (1) destiné à être utilisé dans une construction de cloison sèche (11, 12, 13, 14), le panneau acoustique de cloison sèche (1) comportant une pluralité de perforations (2) formées dans celui-ci, chaque perforation (2) s'étendant à travers le panneau acoustique pour cloison sèche (1) afin de permettre la pénétration de l'air, le panneau acoustique de cloison sèche (1) étant un panneau de placoplâtre ou un panneau de fibres de gypse, **caractérisé en ce que** le panneau acoustique de cloison sèche (2) présente une masse par unité de surface supérieure à 1,2 kg/m² par 1 mm d'épaisseur en tant que panneau non perforé, et **en ce que** le matériau de gypse contient de la chaux ou du BaSO₄.

2. Panneau acoustique de cloison sèche (1) selon la revendication 1, la masse par unité de surface étant supérieure à 1,4 kg/m² par 1 mm d'épaisseur en tant que panneau non perforé.

3. Panneau acoustique de cloison sèche (1) selon l'une des revendications précédentes, les perforations (2) étant de forme carrée, chaque perforation (2) carrée ayant une longueur d'arête de 5 mm à 15 mm, et les perforations (2) adjacentes étant disposées à une distance centre à centre de 20 mm à 30 mm.

4. Panneau acoustique de cloison sèche (1) selon l'une des revendications 1 à 2, les perforations étant de forme circulaire, chaque perforation (2) circulaire ayant un diamètre de 15 mm à 25 mm, et les perforations (2) adjacentes étant disposées à une distance de centre à centre de 35 mm à 45 mm.

5. Panneau acoustique de cloison sèche (1) selon l'une des revendications précédentes, les perforations (2) étant remplies d'un matériau poreux.

6. Panneau acoustique de cloison sèche (1) selon la revendication 5, le matériau poreux contenant du charbon actif ou de la perlite.

7. Construction de cloison sèche (11, 12, 13, 14) comprenant un panneau acoustique de cloison sèche (1) selon l'une des revendications précédentes.

8. Construction de cloison sèche (11, 12, 13, 14) selon la revendication 7, les panneaux acoustiques de cloison sèche (1) étant disposés de manière à former une double couche.

9. Construction de cloison sèche (11, 12, 13, 14) selon la revendication 8, la double couche de panneaux acoustiques de cloison sèche (1) comprend des perforations (2) de différents panneaux qui sont disposées de manière à être au moins partiellement reliées entre elles.

10. Construction de cloison sèche (11, 12, 13, 14) selon la revendication 9, les panneaux acoustiques de cloison sèche (1) formant la double couche étant reliés entre eux à l'aide d'un adhésif thermofusible élastique.

11. Construction de cloison sèche (11, 12, 13, 14) selon l'une des revendications 7 à 10, comprenant en outre un matériau absorbant le son.

12. Construction de cloison sèche (11, 12, 13, 14) selon l'une des revendications 7 à 11, comprenant en outre un matériau non-tissé.
